# EUROPEAN PATENT APPLICATION

(11) **EP 4 420 761 A1**
(43) Date of publication of application: **28.08.2024**
(21) Application number: 23020087.5
(22) Date of filing: 23.02.2023
(51) Int. Cl.: B01D 53/22

(54) **METHOD AND A PROCESS POLANT FOR ENRICHMENT OF A COMPONENT**

(71) Applicant: Linde GmbH, 82049 Pullach (DE)
(72) Inventor: Schiffmann, Patrick, 82049 Pullach (DE); Scherle, Marc, 82049 Pullach (DE); Kim, Yoon Jeoung, 82049 Pullach (DE)
(74) Representative: Lu, Jing

(57) **Abstract**

The invention relates to a method and a plant for enrichment of a component using a first membrane stage (1), a second membrane stage (2) and a third membrane stage (3), wherein the first membrane stage (1) is fed with a first feed mixture (F1), the second membrane stage (2) is fed with a second feed mixture (F2) and the third membrane stage (3) is fed with a third feed mixture (F3), wherein the first feed mixture (F1) is formed at least partially from an input mixture (I), the second feed mixture (F2) is formed at least partially from the first permeate (P1), or a part thereof, and the third feed mixture (F3) is formed from the second permeate (P2), or a part thereof. In the first membrane stage (1) a first permeate (P1) and a first retentate (R1) are formed, in the second membrane stage (2) a second permeate (P2) and a second retentate (R2) are formed and in the third membrane stage (3) a third permeate (P3) and a third retentate (R3) are formed. The size of the second membrane stage (2) is configured such that the concentration of the component in the second retentate (R2) corresponds to the concentration of the component in the input mixture (I), and the first feed mixture (F1) is further at least partially formed by the second retentate (R2).

## Description

The invention relates to a method and a process plant for enrichment of a component.

### Background

Membrane separation is commonly used in the industry for separating gaseous components. A membrane used in membrane separation is a partially transmissive element which has a selective semipermeable barrier between two phases: feed and permeate. Components with high permeance can pass the barrier and gather on the permeate side, whereas components with low permeance remain on the feed side of the membrane.

A membrane can be fabricated from various materials, such as polymer and ceramic. Its material, structure, and homogeneity characterize the property of membrane, i.e. its permeability, physical and chemical stability.

Membranes are conventionally arranged in closed units and vary in their form, packing density, and flow configuration.

The driving force of the membrane is the partial pressure difference. Temperature and operating pressure affect the performance of the membrane.

Producing high purity helium from low concentrated sources usually requires multiple enrichment and purification steps. One possibility to achieve this is using membranes for enrichment and recovery of helium from the stream and send the enriched stream to a pressure swing adsorption (PSA) stage for final purification.

The disadvantage of using a PSA is that it cannot be scaled down to very small feed streams and thus, many small sources cannot be explored. Trucking the natural gas containing only a low concentration of the noble gas, in particular helium, to the next enrichment facility or connecting multiple natural gas wells per pipeline is also not viable as the costs are too high and many of these small sources will be depleted after a short period of time.

Therefore, there is a need to scale down enrichment facilities and lower their cost, especially with regard to the aforementioned limitations.

### Disclosure of the Invention

With this in mind, the present invention proposes a method of enrichment of a component and a corresponding process plant configured for carrying out the method according to the features of the independent claims. Preferred embodiments are the subject of the dependent claims as well as the following description.

Before explaining the advantages of the present invention, some terms used in describing the invention are defined in more detail below.

Component mixtures, as used herein, may be rich or poor in one or more components, where the term "rich" may refer to a content of at least 75%, 80%, 90%, 95%, or 99%, and the term "poor" may refer to a content of at most 25%, 20%, 1 0%, 5%, or 1%, on a molar, weight, or volume basis. Component mixtures, as used herein, may further be enriched or depleted in one or more components, wherein these terms refer to a corresponding content in another component mixture using which the component mixture under consideration was formed. The component mixture under consideration is "enriched" if it has at least 1.5 times, 2 times, 5 times, 10 times, 100 times or 1,000 times the content of the designated component(s), and "depleted" if it has at most 0.75 times, 0.5 times, 0.1 times, 0.01 times or 0.001 times the content of the designated component(s). A component mixture "predominantly" containing one or more components is in particular rich in this or these components in the sense just explained.

Where reference is made herein to "forming" a component mixture using another component mixture, let it be understood that the component mixture under consideration has at least some of the components contained in or formed by the other component mixture. Forming one component mixture from another may include, for example, branching off a portion of the component mixture, feeding one or more additional components or component mixtures, chemically or physically reacting at least some components, and heating, cooling, evaporating, condensing, etc.

The present invention proposes a method for enrichment of a component from a gas source being poor in the component to be enriched using a first membrane stage, a second membrane stage and a third membrane stage. The component is in particular a noble gas, for example helium, while the gas source can for example be natural gas. The present invention is not limited accordingly. The first membrane stage is fed with a first feed mixture, the second membrane stage is fed with a second feed mixture and the third membrane stage is fed with a third feed mixture. In the first membrane stage a first permeate and a first retentate are formed, while in the second membrane stage a second permeate and a second retentate are formed and in the third membrane stage a third permeate and a third retentate are formed.

The first feed mixture is formed at least partially from an input mixture containing a low concentration of the component, i.e., is poor in the component, particularly the gas source mentioned, the second feed mixture is formed at least partially from the first permeate, or a part thereof, and the third feed mixture is formed from the second permeate, or a part thereof. In particular, the concentration of the component in the input mixture is within a range from including 0,05 vol% to including 20 vol%, in particular from including 0,5 vol% to including 10 vol%, for example from including 1,0 vol% to including 5,0 vol%.

The size of the second membrane stage is configured such that the concentration of the component in the second retentate corresponds to the concentration of the component in the input mixture and the first feed mixture is further at least partially formed by the second retentate. In particular, the concentration of the component in the second retentate is within a range from including 0,05 vol% to including 20 vol%, in particular from including 0,5 vol% to including 10 vol%, for example from including 1,0 vol% to including 5,0 vol%.

In a specific configuration, the concentration of the component in the second retentate is in a range between, respectively including, 0.5 to 2 times the concentration of the component in the input mixture.

Under "corresponding" concentrations, a concentration difference of less than 20%, 10%, 5% or 1% shall be understood.

By recycling the retentate of the second membrane stage, which is depleted in the component ultimately to be enriched, upstream to the first feed mixture fed to the first membrane stage, high recovery and purity of a fast-permeating component can be achieved, thereby improving the efficiency of a process plant for enrichment of a fast-permeating component such as helium from a gas source with a small feed stream and low concentration of the component.

As the proposed method is an only-membrane setup, it enables high mobility and can be installed at reasonable investment costs, improving its feasibility for gas sources with low concentrations of a desirable component.

According to an embodiment, the pressure of the third permeate is controlled by a first pressure controller and a third control valve.

By controlling the pressure of the third permeate the partial pressure difference in the third membrane stage can be controlled, whereby the efficiency of the third membrane stage can be improved.

In another embodiment, the pressure of the first retentate is controlled by a second pressure controller and a fourth control valve.

By controlling the pressure of the first retentate, the partial pressure difference in the first membrane stage can be controlled, whereby the efficiency of the first membrane stage can be improved.

In an embodiment, the second feed mixture is further at least partially formed by the third retentate.

By additionally recycling the component-depleted retentate of the third membrane stage upstream to the second feed mixture of the second membrane stage the recovery and purity of a fast-permeating component can be even further increased, whereby the efficiency of a process plant for enrichment of a fast-permeating component such as helium from a gas source with a small feed stream and low concentration of the component can be further improved.

In an embodiment, the pressure of the third retentate is controlled by a third pressure controller and a third control valve.

By controlling the pressure of the third retentate, the partial pressure difference in the third membrane stage can be controlled, whereby the efficiency of the third membrane stage can be improved. Further, the flow of the third retentate to upstream of the second membrane stage can be controlled if the second feed mixture is also formed by the third retentate, whereby the flow to the second membrane stage can be controlled and the second membrane stage can work at its optimal working point.

In another embodiment, the second feed mixture is compressed by a first compressor before being fed to the second membrane stage.

By compressing the second feed mixture, the inlet pressure to the second membrane stage can be increased, whereby the second membrane stage can be operated at its optimal working point, thus increasing the efficiency of enrichment of the component.

In an embodiment, the second permeate is compressed by a second compressor before being fed to the third membrane stage.

By compressing the second permeate, which is also the third feed mixture, the inlet pressure to the third membrane stage can be increased, whereby the third membrane stage can be operated at its optimal working point, thus increasing the efficiency of enrichment of the component. Further, a setup of the plant with a first and a second compressor allows the use of the plant at gas sources with a low feed pressure, as the pressure of the second and third feed mixtures can be increased, whereby the second and third membrane stage can operate, even if the gas source only provides the gas mixture at low pressure.

The proposed process plant for the enrichment of a component from a gas source containing the component to be enriched in a low concentration, i.e. is poor in the component to be enriched, is configured to perform a method according any of the presented embodiments. For further features and advantages of such a plant and embodiments thereof, reference is therefore expressly made to the above explanations concerning the process proposed in accordance with the present invention and the embodiments, since these apply equally thereto.

### Short description of the Figures

Figure 1 shows a process plant configured to perform an embodiment according to the invention; and
Figure 2 shows a process plant configured to perform another embodiment according to the invention.

### Embodiments of the invention

The embodiments described below are described for the purpose of assisting the reader in understanding the claimed and previously explained features. They are merely representative examples and are not intended to be considered exhaustive and/or limiting with respect to the features of the invention. It is understood that the advantages, embodiments, examples, functions, features, structures and/or other aspects described previously and hereinafter are not to be considered limitations of the scope of the invention as defined in the claims or limitations of equivalents to the claims, and that other embodiments may be used and modifications made without departing from the scope of the claimed invention.

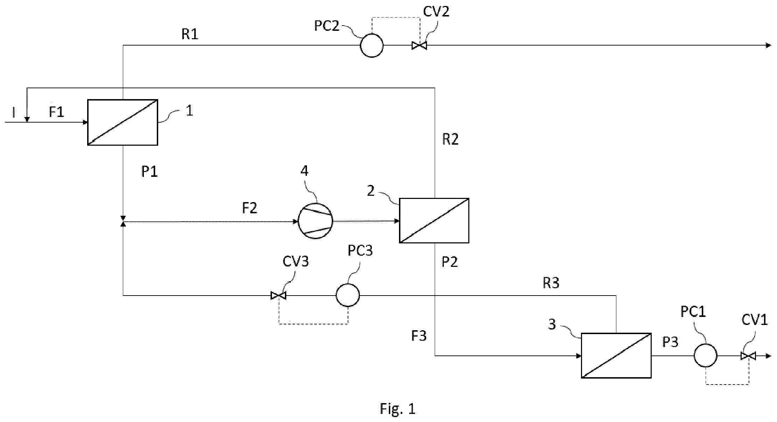

Figure 1 shows a process plant configured to perform an embodiment according to the invention. The process plant comprises a first membrane stage 1, a second membrane stage 2 and a third membrane stage 3. The input mixture I, which is fed to the plant, contains a low concentration of a fast-permeating component, i.e. is poor in the component, which should be enriched to form a product that is rich in that component, in a mixture with one or more slow-permeating components, e.g. Nitrogen, which should be depleted to form a product that is poor in that component. The concentration of the fast-permeating component in the input mixture is in particular within a range from including 0,1 vol% to including 20 vol%, for example from including 0,5 vol% to including 10 vol%, for example from including 1,0 vol% to including 5,0 vol%, whereby the component is in particular a noble gas, for example helium. The first feed mixture F1 fed to the first membrane stage 1 is further formed at least partially from the second retentate R2 formed by the second membrane stage 2. The second membrane stage 2 is configured, to form a second retentate R2 that has a concentration of the component similar to the input mixture I, which in particular is natural gas.

In the first membrane stage, a first permeate P1 and a first retentate R1 are formed. The pressure of the first retentate R1 is controlled by a second pressure control PC2 and a second control valve CV2. By controlling the pressure of the first retentate R1, the partial pressure difference in the first membrane stage 1 can be controlled so that the efficiency of the first membrane stage 1 is improved.

The first permeate P1 formed by the first membrane stage 1 is enriched compared to the first feed mixture F1 and is mixed with the third retentate R3 formed by the third membrane stage 3 to form the second feed mixture F2. In the process, the pressure of the third retentate R3 is controlled by a third pressure control PC3 and a third control valve CV3. By controlling the flow of third retentate R3 to upstream of the second membrane stage 2 the amount and flow of the second feed mixture F2 can be controlled. Additionally, the partial pressure difference in the third membrane stage 3 can be controlled, greatly increasing its efficiency.

Further, the second feed mixture F2 is compressed by a first compressor 4. Thereby, the partial pressure difference in the second membrane stage 2 can be increased and the enrichment of the component in the second permeate P2 can be increased.

The second permeate P2 is fed as the third feed mixture F3 to the third membrane stage 3, in which the depleted third retentate R3 and the further enriched third permeate P3 are formed. The pressure of the third permeate P3 is controlled by a first pressure control PC1 and a first control valve CV1, which allows for control of the partial pressure in the third membrane stage 3, whereby the third membrane stage 3 can work at its optimal working point greatly increasing its enrichment efficiency.

As the plant utilizes three membrane stage 1, 2, 3 and refeeds the second and third retentate R2, R3 to upstream of the first and second membrane stage 1, 2, respectively, a flexible and transportable plant that can easily be deployed in different locations with low effort, especially in locations with small and/or low concentrated gas sources, i.e. gas sources, e.g. natural gas, with a low concentration of the component that is to be enriched, e.g. noble gases like helium, is suggested.

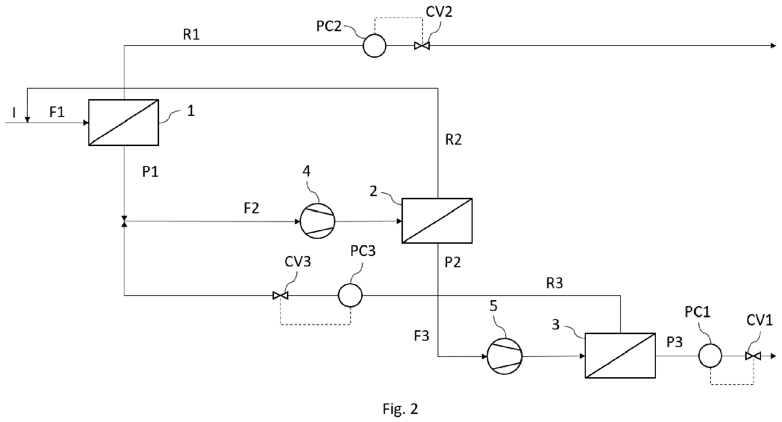

Figure 2 shows a process plant configured to perform another embodiment according to the invention.

Same reference signs relate to the same devices and for details, reference is made to the above description.

The plant shown in Figure 2 additionally comprises a second compressor 5 located between the second membrane stage 2 and the third membrane stage 3 and compresses the third feed mixture F3.

By this compression, the partial pressure difference in the third membrane stage 3 can be controlled such that the third membrane stage 3 operates at its optimal working point thereby greatly increasing its enrichment efficiency.

Further, a setup of the plant with a first and a second compressor 4, 5 allows the use of the plant at gas sources with a low feed pressure, as the pressure of the second and third feed mixtures F2, F3 can be increased, whereby the second and third membrane stage 2, 3 can operate, even if the gas source only provides the gas mixture at low pressure.

## Claims

1. Method for enrichment of a component using a first membrane stage (1), a second membrane stage (2) and a third membrane stage (3),
wherein the first membrane stage (1) is fed with a first feed mixture (F1), the second membrane stage (2) is fed with a second feed mixture (F2) and the third membrane stage (3) is fed with a third feed mixture (F3),
wherein in the first membrane stage (1) a first permeate (P1) and a first retentate (R1) are formed, in the second membrane stage (2) a second permeate (P2) and a second retentate (R2) are formed and in the third membrane stage (3) a third permeate (P3) and a third retentate (R3) are formed,
wherein the first feed mixture (F1) is formed at least partially from an input mixture (I), the second feed mixture (F2) is formed at least partially from the first permeate (P1), or a part thereof, and the third feed mixture (F3) is formed from the second permeate (P2) or a part thereof,
wherein the size of the second membrane stage (2) is configured such that the concentration of the component in the second retentate (R2) corresponds to the concentration of the component in the input mixture (I), and
wherein the first feed mixture (F1) is further at least partially formed by the second retentate (R2).

2. Method according to claim 1, wherein the component is a noble gas, in particular helium.

3. Method according to any of claim 1 or 2, wherein the input mixture (I) is natural gas.

4. Method according to any of the preceding claims, wherein the concentration of the component in the input mixture (I) is within a range from including 0,05 vol% to including 20 vol%, in particular from including 0,5 vol% to including 10 vol%, for example from including 1,0 vol% to including 5,0 vol%.

5. Method according to any of the preceding claims, wherein the concentration of the component in the second retentate (R2) is within a range from including 0,05 vol% to including 20 vol%, in particular from including 0,5 vol% to including 10 vol%, for example from including 1,0 vol% to including 5,0 vol%.

6. Method according to any of the preceding claims, wherein the pressure of the third permeate (P3) is controlled by a first pressure controller (PC1) and a third control valve (CV1).

7. Method according to any of the preceding claims, wherein the pressure of the first retentate (R1) is controlled by a second pressure controller (PC2) and a fourth control valve (CV2).

8. Method according to any of the preceding claims, wherein the second feed mixture (F2) is further at least partially formed by the third retentate (R3).

9. Method according to any of the preceding claims, wherein the pressure of the third retentate (R3) is controlled by a third pressure controller (PC3) and a third control valve (CV3).

10. Method according to any of the preceding claims, wherein the second feed mixture (F2) is compressed by a first compressor (4) before being fed to the second membrane stage (2).

11. Method according to any of the preceding claims, wherein the second permeate (P2) is compressed by a second compressor (5) before being fed to the third membrane stage (3).

12. Process plant for enrichment of a component comprising a first membrane stage (1), a second membrane stage (2) and a third membrane stage (3), wherein the size of the second membrane stage (2) is configured such that the concentration of the component in a second retentate (R2) formed in the second membrane stage (2) corresponds to the concentration of the component in an input mixture (I) and configured to perform the method according to any of the preceding claims.
